# EUROPEAN PATENT APPLICATION

(11) **EP 2 136 537 A1**
(43) Date of publication of application: **23.12.2009**
(21) Application number: 08721819.4
(22) Date of filing: 11.03.2008
(51) Int. Cl.: H04M 1/00, G06F 3/023, G06F 3/033

(54) **PORTABLE TERMINAL DEVICE, AND METHOD AND PROGRAM FOR STARTING FUNCTION OF THE SAME**

(30) Priority: 16.03.2007 JP 2007068566
(71) Applicant: Nec Corporation, Tokyo 108-8001 (JP)
(72) Inventor: KOITABASHI, Yusuke, Tokyo 108-8001 (JP)
(74) Representative: Vossius & Partner
(86) International application number: PCT/JP2008/054403
(87) International publication number: WO 2008/126571

(57) **Abstract**

The present invention provides a folder mobile phone that starts a previously set predetermined function in accordance with an inclination of an apparatus body of when any one of housings of a mobile terminal apparatus enters an opened state, a function starting method thereof, and a program. According to an exemplary embodiment of the present invention, the mobile terminal apparatus that includes a first housing and a second housing includes a function setting unit that associates a predetermined function with each inclination of a body of the mobile terminal apparatus and previously sets the predetermined function; an opening/closing state detecting unit that detects that any one of the first housing and the second housing is operated and enters in an opened state or a closed state; an inclination detecting unit that detects the inclination of the body of the mobile terminal apparatus, when the opened state is detected by the opening/closing state detecting unit; and a function starting unit that starts the predetermined function previously set by the function setting unit, based on the inclination that is detected by the inclination detecting unit.

## Description

### Technical Field

The present invention relates to a mobile terminal apparatus including two housings, a function starting method, and a function starting program thereof.

### Background Art

At the present time, mobile phones are widely used as mobile terminal apparatuses. In addition, as the configuration of the mobile phone, the mobile phone may include one housing. However, the mobile phone generally includes two housings. Examples of the mobile phone that includes the two housings is: a stack-type mobile phone (for example, refer to Patent Document 1) in which any one of two housings is slid or rotated in a horizontal direction from a closed state where the two housings overlap each other, thereby making the housing enter in an opened state; and a folder mobile phone (for example, refer to Patent Document 2) in which any one of two housings is rotated through a hinge portion from a closed state where the two housings overlap each other, thereby making the housing enter in an opened state.
Patent Document 1: Japanese Patent Application Laid-Open No. 2004-260749
Patent Document 2: Japanese Patent Application Laid-Open No. 2006-311224

### Disclosure of the Invention

### Problems to be Solved by the Invention

In the mobile phones that are disclosed in Patent Documents 1 and 2, usability is improved by multifunctionality, but a user interface is restricted. For this reason, a user operation is complicated until a desired function starts.

Accordingly, the present invention has been made in view of the above-described problems, and it is an object of the present invention to provide a folder mobile phone that starts a previously set predetermined function in accordance with an inclination of an apparatus body of when any one of housings of the mobile phone is opened, a function starting method and a function starting program thereof.

### Means for Solving the Problem

In order to achieve the object, a mobile terminal apparatus, of the present invention is a mobile terminal apparatus that includes a first housing and a second housing. The mobile terminal apparatus includes a function setting unit that associates a predetermined function with each inclination of a body of the mobile terminal apparatus and previously sets the predetermined function; an opening/closing state detecting unit that detects that any one of the first housing and the second housing is operated and enters in an opened state or a closed state; an inclination detecting unit that detects the inclination of the body of the mobile terminal apparatus, when the opened state is detected by the opening/closing state detecting unit; and a function starting unit that starts the predetermined function previously set by the function setting unit, based on the inclination that is detected by the inclination detecting unit.

Further, in the mobile terminal apparatus of the present invention, the function starting unit may terminate the started predetermined function, when the closed state is detected by the opening/closing state detecting unit.

Further, in the mobile terminal apparatus of the present invention, each of the first housing and the second housing may include a display unit and a transparent switching unit that is disposed on a front surface of the display unit. The function starting unit may perform control that displays at least one of information related to the started predetermined function and an operation portion to instruct a process according to the started predetermined function, with respect to each display unit, and perform control that enables the switching unit disposed on the front surface of the display unit, with respect to the display unit that displays the operation portion.

Further, in the mobile terminal apparatus of the present invention, each of the first housing and the second housing may include a display unit and a transparent switching unit that is disposed on a front surface of the display unit. When an image display function starts as the predetermined function, the function starting unit may perform control that displays an image by the image display function, with respect to one of the display units, display information related to the image display function and an operation portion to instruct a process according to the image display function, with respect to the other display unit, and perform control that enables the switching unit disposed on the front surface of the other display unit.

Further, in the mobile terminal apparatus of the present invention, the function starting unit may control a display direction in the display unit, based on the inclination that is detected by the inclination detecting unit.

Further, in the mobile terminal apparatus of the present invention, the mobile terminal apparatus may be a stack-type mobile terminal apparatus in which any one of the first housing and the second housing is slid or rotated in a horizontal direction from the closed state where the first housing and the second housing overlap each other, thereby making the housing enter in the opened state, or a folder mobile terminal apparatus in which any one of the first housing and the second housing is rotated through a hinge portion from the closed state where the first housing and the second housing overlap each other, thereby making the housing enter in the opened state.

A function starting method of a mobile terminal apparatus of the present invention is a function starting method of a mobile terminal apparatus that includes a first housing and a second housing. The function starting method includes a function setting step of associating a predetermined function with each inclination of a body of the mobile terminal apparatus and previously setting the predetermined function; an opening/closing state detecting step of detecting that any one of the first housing and the second housing is operated and enters in an opened state or a closed state; an inclination detecting step of detecting the inclination of the body of the mobile terminal apparatus, when the opened state is detected by the opening/closing state detecting step; and a function starting step of starting the predetermined function previously set by the function setting step, based on the inclination that is detected by the inclination detecting step.

Further, the function starting method of the mobile terminal apparatus of the present invention may further include a step of terminating the started predetermined function, when the closed state is detected by the opening/closing state detecting step.

Further, in the function starting method of the mobile terminal apparatus of the present invention, each of the first housing and the second housing may include a display unit and a transparent switching unit that is disposed on a front surface of the display unit. When the predetermined function may start by the function starting step, the function starting method may further include a step of performing control that displays at least one of information related to the predetermined function and an operation portion to instruct a process according to the predetermined function, with respect to each display unit; and a step of performing control that enables the switching unit disposed on the front surface of the display unit, with respect to the display unit that displays the operation portion.

Further, in the function starting method of the mobile terminal apparatus of the present invention, each of the first housing and the second housing may include a display unit and a transparent switching unit that is disposed on a front surface of the display unit. When an image display function starts as the predetermined function by the function starting step, the function starting method may further include a step of performing control that displays an image by the image display function, with respect to one of the display units; a step of displaying information related to the image display function and an operation portion to instruct a process according to the image display function, with respect to the other display unit; and a step of performing control that enables the switching unit disposed on the front surface of the other display unit.

Further, the function starting method of the mobile terminal apparatus of the present invention may further include a step of controlling a display direction in the display step, based on the inclination that is detected by the inclination detecting step.

Further, in the function starting method of the mobile terminal apparatus of the present invention, the mobile terminal apparatus may be a stack-type mobile terminal apparatus in which any one of the first housing and the second housing is slid or rotated in a horizontal direction from the closed state where the first housing and the second housing overlap each other, thereby making the housing enter in the opened state, or a folder mobile terminal apparatus in which any one of the first housing and the second housing is rotated through a hinge portion from the closed state where the first housing and the second housing overlap each other, thereby making the housing enter in the opened state.

A program of the present invention is a program for causing a computer to execute a function starting method of a mobile terminal apparatus including a first housing and a second housing. The program causing the computer to execute: a function setting process that associates a predetermined function with each inclination of a body of the mobile terminal apparatus and previously sets the predetermined function; an opening/closing state detecting process that detects that any one of the first housing and the second housing is operated and enters in an opened state or a closed state; an inclination detecting process that detects the inclination of the body of the mobile terminal apparatus, when the opened state is detected by the opening/closing state detecting process; and a function starting process that starts the predetermined function previously set by the function setting process, based on the inclination that is detected by the inclination detecting process.

Further, in the program of the present invention, the program may cause the computer to execute a process of terminating the started predetermined function, when the closed state is detected by the opening/closing state detecting process.

Further, in the program of the present invention, each of the first housing and the second housing may include a display unit and a transparent switching unit that is disposed on a front surface of the display unit. When the predetermined function starts by the function starting process, the program may cause the computer to execute a process of performing control that displays at least one of information related to the predetermined function and an operation portion to instruct a process according to the predetermined function, with respect to each display unit, and a process of performing control that enables the switching unit disposed on the front surface of the display unit, with respect to the display unit that displays the operation portion.

Further, in the program of the present invention, each of the first housing and the second housing may include a display unit and a transparent switching unit that is disposed on a front surface of the display unit. When an image display function starts as the predetermined function by the function starting process, the program may cause the computer to execute a process of performing control that displays an image by the image display function, with respect to one of the display units, a process of displaying information related to the image display function and an operation portion to instruct a process according to the image display function, with respect to the other display unit, and a process of performing control that enables the switching unit disposed on the front surface of the other display unit.

Further, in the program of the present invention, the program may cause the computer to execute a process of controlling a display direction in the display process, based on the inclination that is detected by the inclination detecting process.

Further, in the program of the present invention, the mobile terminal apparatus may be a stack-type mobile terminal apparatus in which any one of the first housing and the second housing is slid or rotated in a horizontal direction from the closed state where the first housing and the second housing overlap each other, thereby making the housing enter in the opened state, or a folder mobile terminal apparatus in which any one of the first housing and the second housing is rotated through a hinge portion from the closed state where the first housing and the second housing overlap each other, thereby making the housing enter in the opened state.

### Effects of the Invention

According to the present invention, a predetermined function that is previously set by a user starts in accordance with an inclination of an apparatus body of when any housing is operated and enters in an opened state. Accordingly, at the same time as the operation for operating the housing and making the housing enter in the opened state, a function that the user desires to use can be started. As a result, it is possible to improve usability of the user operation.

### Best Mode for Carrying Out the Invention

Hereinafter, a best mode for carrying out the present invention will be described in detail with reference to the accompanying drawings.

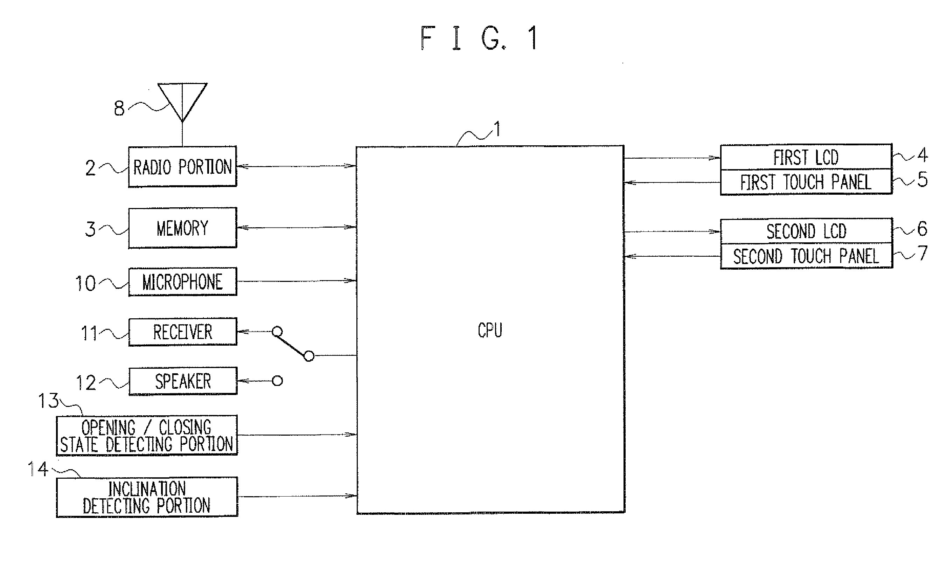

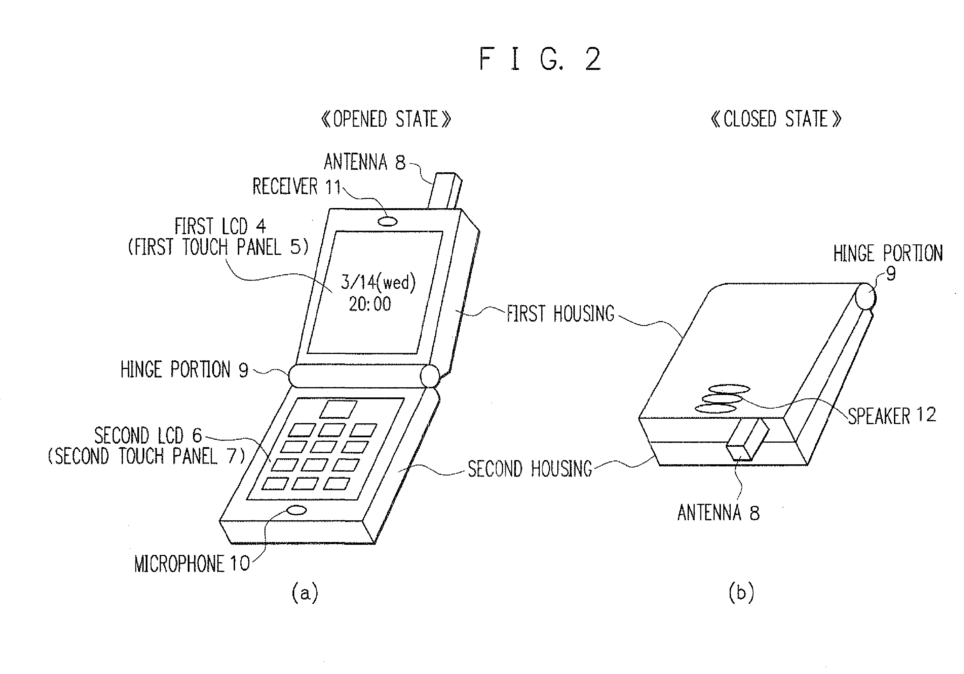

As an exemplary embodiment of a mobile terminal apparatus of the present invention, a folder mobile phone where two housings are connected by a hinge portion, and are rotated through the hinge portion and can be opened or closed will be described. Further, the present invention can be applied to the stack-type mobile terminal apparatus (refer to Patent Document 1) where any one of two housings is slid or rotated in a horizontal direction from a closed state in which the two housings overlap each other, thereby making the housing enter in an opened state. Fig. 1 is a block diagram illustrating the configuration of a main portion of a folder mobile phone according to this embodiment. Fig. 2 is a perspective view illustrating an appearance of a folder mobile phone according to this embodiment.

As shown in Fig. 2, in the folder mobile phone (hereinafter, simply referred to as "mobile phone") according to this embodiment, a first housing and a second housing are connected by a hinge portion 9. The first housing and the second casting are rotated through the hinge portion 9 and can be opened or closed. FIG. 2A shows an opened state and FIG. 2B shows a closed state.

In addition, as shown in Fig. 1, the folder mobile phone according to this embodiment includes an antenna 8, a radio portion 2, a memory 3, a microphone 10, a receiver 11, a speaker 12, an opening/closing state detecting portion 13, an inclination detecting portion 14, a first LCD 4, a first touch panel 5, a second LCD 6, a second touch panel 7, and a CPU 1.
The radio portion 2 executes transmitting and receiving processes of radio data when verbal communication, TV phone communication, or transmission and reception of a mail are performed. In the memory 3, write and read operations can be arbitrarily performed. The memory 3 stores a plurality of display layouts that are suitable for various scenes, and stores various programs to operate the mobile phone or unique information of the mobile phone, such as ID information and a phone number. The microphone 10 inputs a voice. The receiver 11 outputs a voice or a ring tone. The speaker 12 corresponds to hands-free communication at the time of the TV phone communication. The opening/closing state detecting portion 13 detects an opening/closing state of the mobile phone. The inclination detecting portion 14 detects an inclination of a body of the mobile phone. The first LCD 4 and the first touch panel 5 are a display unit and an operation receiving unit that are provided in one housing (first housing in this embodiment), respectively. The second LCD 6 and the second touch panel 7 are a display unit and an operation receiving unit that are provided in the other housing (second housing in this embodiment), respectively. The CPU (Central Processing Unit) 1 controls the operation of the individual portions.

The display unit that is provided for each housing is not limited to the LCD, and may be an organic EL display (Organic Electroluminescence Display). Further, the touch panel that is disposed on the front surface of the LCD may be a pressure-sensitive touch panel that detects a pressure, an electrostatic touch panel that detects static electricity, and another switching unit that includes the same function as the touch panel.

Further, it is possible to switch whether to output a received voice to the receiver 11 or the speaker 12 depending on communication using only a voice or TV phone communication.

The opening/closing state detecting portion 13 monitors an opening/closing state of the mobile phone and transmits a signal to the CPU 1 in accordance with the variation in the opening/closing state. As a result, the CPU 1 can perform various control operations according to the opening/closing state.

The inclination detecting portion 14 monitors an inclination (displacement) of the body of the mobile phone and transmits a signal to the CPU 1 in accordance with the variation in the inclination. As a result, the CPU 1 can perform various control operations according to the inclination. As the example of the inclination detecting portion 14, an acceleration sensor can be used. However, the present invention is not limited thereto.

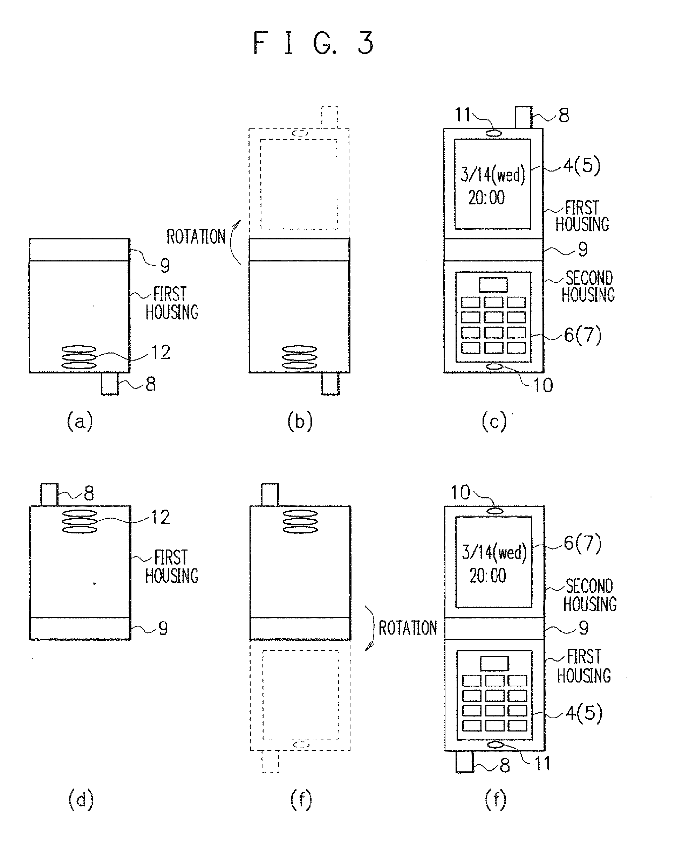

Here, the basic control operation of the mobile phone according to this embodiment will be described with reference to Fig. 3.
For example, when the mobile phone according to this embodiment is closed at the inclination shown in Fig. 3A, the inclination detecting portion 14 detects the inclination (displacement) of the body of the mobile phone, and transmits a signal indicating the detected inclination (angle. The angle in Fig. 3A is assumed as 0 degree) to the CPU 1. The CPU 1 recognizes the inclination of the body of the mobile phone, based on the signal transmitted from the inclination detecting portion 14. Further, the opening/closing state detecting portion 13 detects that the body of the mobile phone is in a closed state, and transmits a signal indicating the closed state to the CPU 1. The CPU 1 recognizes that the body of the mobile phone is in the closed state, based on the signal transmitted from the opening/closing state detecting portion 13.

In addition, as shown in FIG. 3B, if the first housing is rotated through the hinge portion 9, the first housing enters in the opened state, as shown in FIG. 3C. At this time, the opening/closing state detecting portion 13 detects that the body of the mobile phone is in the opened state, and transmits a signal indicating the opened state to the CPU 1. If the CPU 1 recognizes that the mobile phone enters in the opened state, based on the signal transmitted from the opening/closing state detecting portion 13, the CPU 1 reads out a predetermined display layout that is stored in the memory 3. In addition, based on the display layout, the CPU 1 displays a common screen such as a standby screen (example where a date or time is displayed, in FIG. 3C) on the first LCD 4 at the side of the first housing, and displays an operation portion such as an operation key on the second LCD 6 at the side of the second housing. At this time, the CPU 1 enables the second touch panel 7. In addition, if the predetermined operation key that is displayed on the second LCD 6 is pressed by the user, the second touch panel 7 reads out the coordinates of the pressed place, detects the pressed key based on the read result, and reports the detection result to the CPU 1. The CPU 1 performs the corresponding control and realizes a desired key operation. The validity/invalidity of the first touch panel 5 at the side of the first housing may be arbitrarily set in accordance with a used scene. However, in order to prevent an erroneous operation, the touch panel that is disposed on the front surface of the LCD where the key is not displayed is preferably disabled.

For example, when the mobile phone according to this embodiment is closed at the inclination shown in FIG. 3D, the inclination detecting portion 14 detects the inclination (displacement) of the body of the mobile phone, and transmits a signal indicating the detected inclination (angle, the angle in FIG. 3D is assumed as 180 degrees) to the CPU 1. The CPU 1 recognizes the inclination of the body of the mobile phone, based on the signal transmitted from the inclination detecting portion 14. Further, the opening/closing state detecting portion 13 detects that the body of the mobile phone is in a closed state, and transmits a signal indicating the closed state to the CPU 1. The CPU 1 recognizes that the body of the mobile phone is in the closed state, based on the signal transmitted from the opening/closing state detecting portion 13.

In addition, as shown in Fig. 3E, if the first housing is rotated through the hinge portion 9, the first housing enters in the opened state, as shown in Fig. 3F. At this time, the opening/closing state detecting portion 13 detects that the body of the mobile phone is in the opened state, and transmits a signal indicating the opened state to the CPU 1. If the CPU 1 recognizes that the mobile phone enters in the opened state, based on the signal transmitted from the opening/closing state detecting portion 13, the CPU 1 reads out a predetermined display layout that is stored in the memory 3. In addition, based on the display layout, the CPU 1 displays a common screen such as a standby screen (example where a date or time is displayed, in Fig. 3F) on the second LCD 6 at the side of the second housing, and displays an operation portion such as an operation key on the first LCD 4 at the side of the first housing. At this time, the CPU 1 enables the first touch panel 5. In addition, if the predetermined operation key that is displayed on the first LCD 4 is pressed by the user, the first touch panel 5 reads out the coordinates of the pressed place, detects the pressed key based on the read result, and reports the detection result to the CPU 1. The CPU 1 performs the corresponding control and realizes a desired key operation. The validity/invalidity of the second touch panel 7 at the side of the second housing may be arbitrarily set in accordance with a used scene.
However, in order to prevent an erroneous operation, the touch panel that is disposed on the front surface of the LCD where the key is not displayed is preferably disabled.

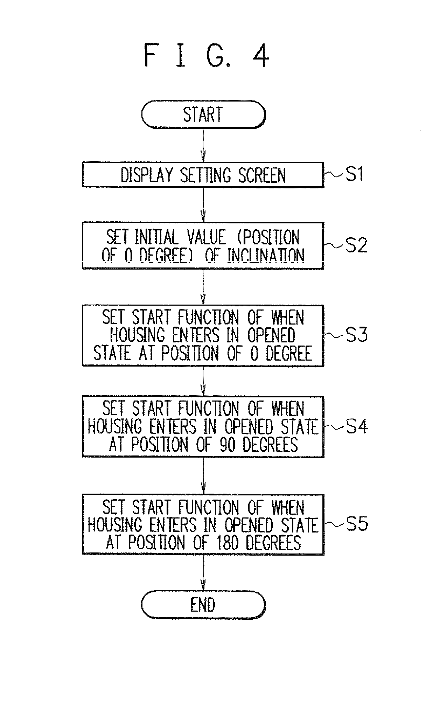

Next, a function starting operation of the mobile phone according to this embodiment will be described.
First, start function setting that functions as initial setting to perform the function starting operation will be described with reference to Fig. 4.
In the mobile phone according to this embodiment, the user rotates the first housing from the state that is shown in Fig. 3A, thereby making the first housing enter in an opened state, as shown in FIG. 3C. In addition, if the user performs the predetermined operation using the operation key that is displayed on the second LCD 6, the CPU 1 receives the predetermined operation, and displays a setting screen to set a starting function on the first LCD 4 (Step S1). Further, the change of the setting screen that is described in detail below is made under the control of the CPU 1.

In the setting screen that is displayed on the first LCD 4, first, the user is instructed to set an initial value of the inclination of the body of the mobile phone. Here, as an example, the inclination (position of 0 degree) of the mobile phone that is shown in Fig. 3A is set as the initial value (reference value used to determine the inclination) (Step S2). As described above, in the setting, when the first housing rotates and enters in the opened state, the inclination (position of 0 degree) is detected by the inclination detecting portion 13, and the CPU 1 recognizes the inclination (position of 0 degree). Thus, the user may perform only a determination operation using the operation key. When the user desires to set an inclination other than the inclination shown in FIG. 3A as the initial value, the user inclines the mobile phone at a desired angle as a reference from the state of FIG. 3C. In addition, if the inclination detecting portion 13 detects the position (inclination) and the CPU 1 recognizes the detection position, the CPU 1 instructs the user to perform the determination operation.

Next, the CPU 1 instructs the user to set a function (start function) that starts when the housing enters in the opened state at the position of 0 degree, in the setting screen. Here, a plurality of functions that can be set are displayed on the setting screen. In this case, among the plurality of displayed functions, it is assumed that a common voice communication function (phone function) is selected by the user operation and set (Step S3).

Next, the CPU 1 instructs the user to set a function (start function) that starts when the housing enters in the opened state at the position of 90 degrees, in the setting screen. Here, a plurality of functions that can be set are displayed on the setting screen. In this case, among the plurality of displayed functions, it is assumed that a TV viewing function (starting of viewing software of one-segment broadcasting. Still image display may be made instead of moving picture display) is selected by the user operation and set (Step S4).

Next, the CPU 1 instructs the user to set a function (start function) that starts when the housing enters in the opened state at the position of 180 degrees, in the setting screen. Here, a plurality of functions that can be set are displayed on the setting screen. In this case, among the plurality of displayed functions, it is assumed that a mail function (starting of mail software) is selected by the user operation and set, for example (Step S5).

As such, the user previously sets an initial value of the inclination and a start function for every inclination, as the start function setting. In addition, the CPU 1 that has received each setting stores each setting in a storage region (storage portion) of the CPU 1 or the memory 3. Further, in the above description, the phone function, the mail function, and the TV viewing function are described as the examples of the start function, but other functions may be set. Furthermore, in the above description, the starting of the phone function at the inclination of 0 degree is set, the starting of the TV viewing function at the inclination of 90 degrees is set, and the starting of the mail function at the inclination of 180 degrees is set. However, each angle and the setting number are not limited thereto.

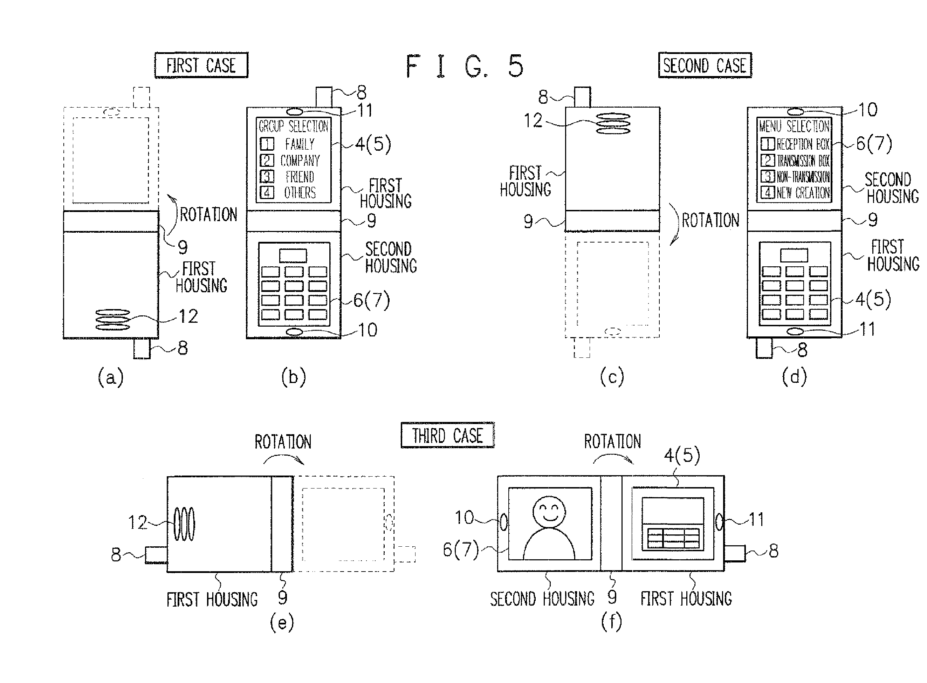

Next, the function starting operation after the above-described start function setting is performed will be described with reference to Fig. 5. Figs. 5A and 5B show a first case, Figs. 5C and D show a second case, and Figs. 5E and F show a third case. In the description below, the description is given for each case.

### [First Case]

When the user desires to make a call, the user moves the mobile phone to a position (position of 0 degree) shown in FIG. 5A, and rotates the first housing to make the first housing enter in the opened state. The CPU 1 receives a notification indicating that the first housing enters in the opened state from the opening/closing state detecting portion 13, and receives a notification indicating the position of 0 degree from the inclination detecting portion 14. In addition, the CPU 1 starts the function of when the housing enters in the opened state at the position of 0 degree, which is previously set in the start function setting. In the above example, since the phone function is set to correspond to the position of 0 degree, the CPU 1 starts the phone function. At this time, under the control of the CPU 1, as shown in FIG. 5B, a phonebook list is displayed on the first LCD 4 (first touch panel 5 is set as invalidity), an operation key is displayed on the second LCD 6, and the second touch panel 7 is set as validity.

The user operates the operation key that is displayed on the second LCD 6, selects a desired address (phone number) from the phonebook that is displayed on the first LCD 4, and makes a call.

In the opened state shown in FIG. 5B, if the user rotates the first housing to make the first housing enter in the closed state shown in FIG. 5A, the opening/closing state detecting unit 13 detects the closed state and notifies the CPU 1 of the closed state. At the same time of recognizing the closed state, the CPU 1 performs a control operation to terminate the phone function during the start.

### [Second Case]

When the user desires to transmit and receive a mail or read the mail, the user moves the mobile phone to a position (position of 180 degrees) shown in FIG. 5C, and rotates the first housing to make the first housing enter in the opened state. The CPU 1 receives a notification indicating that the first housing enters in the opened state from the opening/closing state detecting portion 13, and receives a notification indicating the position of 180 degrees from the inclination detecting portion 14. In addition, the CPU 1 starts the function of when the housing enters in the opened state at the position of 180 degrees, which is previously set in the start function setting. In the above example, since the mail function is set to correspond to the position of 180 degrees, the CPU 1 starts the mail function (mailer). At this time, under the control of the CPU 1, as shown in FIG. 5D, a mail menu list is displayed on the second LCD 6 (second touch panel 7 is set as invalidity), an operation key is displayed on the first LCD 4, and the first touch panel 5 is set as validity.

The user operates the operation key that is displayed on the first LCD 4, selects a desired menu from the menu list that is displayed on the second LCD 6, and executes the selected menu.

In the opened state shown in FIG. 5D, if the user rotates the first housing to make the first housing enter in the closed state shown in FIG. 5C, the opening/closing state detecting unit 13 detects the closed state and notifies the CPU 1 of the closed state. At the same time of recognizing the closed state, the CPU 1 performs a control operation to terminate the mail function during the start.

### [Third Case]

When the user desires to view TV broadcasting such as one-segment broadcasting, the user moves the mobile phone to a position (position of 90 degrees) shown in FIG. 5E, and rotates the first housing to make the first housing enter in the opened state. The CPU 1 receives a notification indicating that the first housing enters in the opened state from the opening/closing state detecting portion 13, and receives a notification indicating the position of 90 degrees from the inclination detecting portion 14. In addition, the CPU 1 starts the function of when the housing enters in the opened state at the position of 90 degrees, which is previously set in the start function setting. In the above example, since the TV viewing function is set to correspond to the position of 90 degrees, the CPU 1 starts the TV viewing function. At this time, under the control of the CPU 1, as shown in FIG. 5F, video of the TV broadcasting is displayed on the second LCD 6 (second touch panel 7 is set as invalidity), a broadcasting browser and an operation key are displayed on the first LCD 4, and the first touch panel 5 is set as validity.

The user refers to the broadcasting browser that is displayed on the first LCD 4 to operate the operation key, and performs setting that is related to the video of the TV broadcasting displayed on the second LCD 6.

In the opened state shown in FIG. 5F, if the user rotates the first housing to make the first housing enter in the closed state shown in FIG. 5E, the opening/closing state detecting unit 13 detects the closed state and notifies the CPU 1 of the closed state. At the same time of recognizing the closed state, the CPU 1 performs a control operation to terminate the TV viewing function during the start.

In the individual cases, the CPU 1 controls the display directions in the LCD (display directions of the phonebook list, the mail menu, the video of the TV broadcasting, and the operation key), based on the inclination that is detected by the inclination detecting unit 14. That is, as shown in Figs. 5B, D, and F, the display is made such that the user can recognize the display contents, regardless of the inclination of the mobile phone. For example, the state of the mobile phone that is shown in FIG. 5D is the same as a state where the mobile phone shown in FIG. 5B is reversed. However, in FIG. 5D, the displays of the LCDs 4 and 6 are not the reversed displays, and the LCDs 4 and 6 are displayed in the same direction as the display shown in FIG. 5B.

As described above, according to the folder mobile phone according to this embodiment, the user can easily start the desired function and alleviate complexity of the user operation. This reason is because a control operation is performed such that the previously set function (application software) starts in accordance with the inclination of when the mobile phone is opened.

The embodiment of the present invention has been described. However, the present invention is not limited to the embodiment, and various changes and modifications can be made without departing from the spirit and scope of the present invention.

This application is based upon and claims the benefit of priority from Japanese patent application No. 2007-068566, filed on March 16, 2007, the disclosure of which is incorporated herein in its entirety by reference.

### Brief Description of the Drawings

Fig. 1 is a block diagram illustrating the configuration of a main portion of a folder mobile phone according to an exemplary embodiment of the present invention.
Fig. 2 is an appearance perspective view illustrating an opening/closing state of a folder mobile phone according to the exemplary embodiment of the present invention.
Fig. 3 is an appearance front view illustrating a change of an opening operation for each inclination of a folder mobile phone according to the exemplary embodiment of the present invention.
Fig. 4 is a flowchart illustrating a start function setting operation of a folder mobile phone according to the exemplary embodiment of the present invention.
Fig. 5 is an appearance front view illustrating each case of a function starting operation of a folder mobile phone according to the exemplary embodiment of the present invention.

### Description of Reference Numerals

1: CPU (function setting unit and function starting unit)
2: radio portion
3: memory
4: first LCD (display unit)
5: first touch panel (switching unit)
6: second LCD (display unit)
7: second touch panel (switching unit)
8: antenna
9: hinge portion
10: microphone
11: receiver
12: speaker
13: opening/closing state detecting portion (opening/closing state detecting unit)
14: inclination detecting portion (inclination detecting unit)

## Claims

1. A mobile terminal apparatus that includes a first housing and a second housing, the mobile terminal apparatus comprising:
function setting means for associating a predetermined function with each inclination of a body of the mobile terminal apparatus and previously setting the predetermined function;
opening/closing state detecting means for detecting that any one of the first housing and the second housing is operated and enters in an opened state or a closed state;
inclination detecting means for detecting the inclination of the body of the mobile terminal apparatus, when the opened state is detected by the opening/closing state detecting means; and
function starting means for starting the predetermined function previously set by the function setting means, based on the inclination that is detected by the inclination detecting means.

2. The mobile terminal apparatus According to claim 1,
wherein the function starting means terminates the started predetermined function, when the closed state is detected by the opening/closing state detecting means.

3. The mobile terminal apparatus according to claim 1 or 2,
wherein each of the first housing and the second housing includes display means and transparent switching means that is disposed on a front surface of the display means, and
the function starting means performs control that displays at least one of information related to the started predetermined function and an operation portion to instruct a process according to the started predetermined function, with respect to each display unit, and performs control that enables the switching means disposed on the front surface of the display means, with respect to the display means that displays the operation portion.

4. The mobile terminal apparatus according to any one of claims 1 to 3,
wherein each of the first housing and the second housing includes display means and transparent switching means that is disposed on a front surface of the display means, and
when an image display function starts as the predetermined function, the function starting means performs control that displays an image by the image display function, with respect to one of the display means,
displays information related to the image display function and an operation portion to instruct a process according to the image display function, with respect to the other display means, and performs control that enables the switching means disposed on the front surface of the other display means.

5. The mobile terminal apparatus according to claim 3 or 4,
wherein the function starting means controls a display direction in the display means, based on the inclination that is detected by the inclination detecting means.

6. The mobile terminal apparatus according to any one of claims 1 to 5,
wherein the mobile terminal apparatus is a stack-type mobile terminal apparatus in which any one of the first housing and the second housing is slid or rotated in a horizontal direction from the closed state where the first housing and the second housing overlap each other, thereby making the housing enter in the opened state, or a folder mobile terminal apparatus in which any one of the first housing and the second housing is rotated through a hinge portion from the closed state where the first housing and the second housing overlap each other, thereby making the housing enter in the opened state.

7. A function starting method of a mobile terminal apparatus that includes a first housing and a second housing, the function starting method comprising:
a function setting step of associating a predetermined function with each inclination of a body of the mobile terminal apparatus and previously setting the predetermined function;
an opening/closing state detecting step of detecting that any one of the first housing and the second housing is operated and enters in an opened state or a closed state;
an inclination detecting step of detecting the inclination of the body of the mobile terminal apparatus, when the opened state is detected by the opening/closing state detecting step; and
a function starting step of starting the predetermined function previously set by the function setting step, based on the inclination that is detected by the inclination detecting step.

8. The function starting method of the mobile terminal apparatus according to claim 7, further comprising:
a step of terminating the started predetermined function, when the closed state is detected by the opening/closing state detecting step.

9. The function starting method of the mobile terminal apparatus according to claim 7 or 8,
wherein each of the first housing and the second housing includes display means and transparent switching means that is disposed on a front surface of the display means, and
when the predetermined function starts by the function starting step, the function starting method further includes:
a step of performing control that displays at least one of information related to the predetermined function and an operation portion to instruct a process according to the predetermined function, with respect to each display unit; and
a step of performing control that enables the switching means disposed on the front surface of the display means, with respect to the display means that displays the operation portion.

10. The function starting method of the mobile terminal apparatus according to any one of claims 7 to 9,
wherein each of the first housing and the second housing includes display means and transparent switching means that is disposed on a front surface of the display means, and
when an image display function starts as the predetermined function by the function starting step, the function starting method further includes:
a step of performing control that displays an image by the image display function, with respect to one of the display means;
a step of displaying information related to the image display function and an operation portion to instruct a process according to the image display function, with respect to the other display unit; and
a step of performing control that enables the switching means disposed on the front surface of the other display means.

11. The function starting method of the mobile terminal apparatus according to claim 9 or 10, further comprising:
a step of controlling a display direction in the display step, based on the inclination that is detected by the inclination detecting step.

12. The function starting method of the mobile terminal apparatus according to any one of claims 7 to 11,
wherein the mobile terminal apparatus is a stack-type mobile terminal apparatus in which any one of the first housing and the second housing is slid or rotated in a horizontal direction from the closed state where the first housing and the second housing overlap each other, thereby making the housing enter in the opened state, or a folder mobile terminal apparatus in which any one of the first housing and the second housing is rotated through a hinge portion from the closed state where the first housing and the second housing overlap each other, thereby making the housing enter in the opened state.

13. A program for causing a computer to execute a function starting method of a mobile terminal apparatus including a first housing and a second housing, the program causing the computer to execute:
a function setting process that associates a predetermined function with each inclination of a body of the mobile terminal apparatus and previously sets the predetermined function;
an opening/closing state detecting process that detects that any one of the first housing and the second housing is operated and enters in an opened state or a closed state;
an inclination detecting process that detects the inclination of the body of the mobile terminal apparatus, when the opened state is detected by the opening/closing state detecting process; and
a function starting process that starts the predetermined function previously set by the function setting process, based on the inclination that is detected by the inclination detecting process.

14. The program according to claim 13,
wherein the program causes the computer to execute a process of terminating the started predetermined function, when the closed state is detected by the opening/closing state detecting process.

15. The program according to claim 13 or 14,
wherein each of the first housing and the second housing includes display means and transparent switching means that is disposed on a front surface of the display means, and
when the predetermined function starts by the function starting process, the program causes the computer to execute a process of performing control that displays at least one of information related to the predetermined function and an operation portion to instruct a process according to the predetermined function, with respect to each display means, and
a process of performing control that enables the switching means disposed on the front surface of the display means, with respect to the display means that displays the operation portion.

16. The program according to any one of claims 13 to 15,
wherein each of the first housing and the second housing includes display means and transparent switching means that is disposed on a front surface of the display means, and
when an image display function starts as the predetermined function by the function starting process, the program causes the computer to execute a process of performing control that displays an image by the image display function, with respect to one of the display means,
a process of displaying information related to the image display function and an operation portion to instruct a process according to the image display function, with respect to the other display means, and
a process of performing control that enables the switching means disposed on the front surface of the other display means.

17. The program according to claim 15 or 16,
wherein the program causes the computer to execute a process of controlling a display direction in the display process, based on the inclination that is detected by the inclination detecting process.

18. The program according to any one of claims 13 to 17,
wherein the mobile terminal apparatus is a stack-type mobile terminal apparatus in which any one of the first housing and the second housing is slid or rotated in a horizontal direction from the closed state where the first housing and the second housing overlap each other, thereby making the housing enter in the opened state, or a folder mobile terminal apparatus in which any one of the first housing and the second housing is rotated through a hinge portion from the closed state where the first housing and the second housing overlap each other, thereby making the housing enter in the opened state.
